# EUROPÄISCHE PATENTANMELDUNG

(11) **EP 0 982 202 A2**
(43) Veröffentlichungstag der Anmeldung: **01.03.2000**
(21) Anmeldenummer: 99114465.0
(22) Anmeldetag: 23.07.1999
(51) Int. Cl.: B60R 25/04

(54) **Wegfahrsperreinrichtung für ein Kraftfahrzeug**

(30) Priorität: 28.08.1998 DE 19839349
(71) Anmelder: DaimlerChrysler AG, 70567 Stuttgart (DE)
(72) Erfinder: Daiss, Michael, 70794 Filderstadt (DE); Geber, Michael, 72574 Bad Urach (DE)

(57) **Zusammenfassung**

Die Erfindung bezieht sich auf eine Wegfahrsperreinrichtung für ein Kraftfahrzeug, die ein fahrzeugseitiges Wegfahrsperrensteuerteil, ein oder mehrere, benutzerseitig mitführbare Authentikationselemente und einen Ansteuerkommunikationskanal für authentikationsbehaftete Wegfahrsperren-Ansteuerkommunikationsvorgänge zwischen dem jeweiligen Authentikationselement und dem Wegfahrsperrensteuerteil umfaßt, wobei der Wegfahrsperrensteuerteil nur bei positiver Fahrberechtigungsprüfung den Fahrbetrieb bzw. einen Motorstart freigibt.

Erfindungsgemäß ist ein fahrzeugseitig angeordnetes, authentikationselementfrei betätigbares Wegfahrsperren-Betätigungselement zur benutzerangeforderten Auslösung der authentikationsbehafteten Wegfahrsperren-Ansteuerkommunikationsvorgänge vorgesehen. Alternativ oder zusätzlich kann vorgesehen sein, daß das Bremspedal als Betätigungselement zur Aktivierung eines Motorstarts nach dessen Freigabe durch das Wegfahrsperrensteuerteil dient.

Verwendung z.B. für Automobile.

## Beschreibung

Die Erfindung sich auf eine Wegfahrsperreinrichtung für ein Kraftfahrzeug nach dem Oberbegriff des Anspruchs 1 bzw. 2.

Frühere Wegfahrsperreinrichtungen dieser Art in Automobilen bestanden meist ausschließlich aus mechanischen Schlüssel/Zündschloß-Systemen, d.h. der fahrzeugseitige Wegfahrsperrensteuerteil war nur von einem mechanisch betätigbaren Zündschloß gebildet, das von benutzerseitig mitführbaren, mechanischen Schlüsseln als Authentikationselementen über den zugehörigen, vom meSchloß gebildeten Ansteuerkommunikationskanal betätigt werden konnte, um in einer ersten Stufe die allgemeine Bordnetzversorgung einzuschalten, sogenannte "Radiostellung" oder standardisierte Klemme 15R, in einer zweiten Stufe die Zündung einzuschalten, standardisierte Klemme 15, und in einer dritten Stufe die Motorstartereinheit zu aktivieren, standardisierte Klemme 50, wobei nach erfolgtem Motorstart der Schlüssel in die Zündung-ein-Stellung zurückkehrt.

Diese mechanischen Wegfahrsperreinrichtungen werden heutzutage vermehrt durch elektronische Wegfahrsperren ersetzt oder wenigstens ergänzt. Diese moderneren, elektronischen Fahrberechtigungssysteme benötigen kein mechanisches Schloß, sondern verwendet zur Authentikationskommunikation einen drahtlosen Ansteuerkommunikationskanal. Ein erster Typ solcher Systeme benutzt in Analogie zu den klassischen mechanischen Schlüssel/Schloß-Systemen elektronische Schlüssel als Authentikationselemente. Je nach Systemauslegung sind an den elektronischen Schlüsseln Bedientasten zur Auslösung von authentikationsbehafteten, d.h. die Fahrberechtigung überprüfenden Wegfahrsperren-Ansteuerkommunikationsvorgängen vorgesehen oder letztere lauten über einen Nahfeld-Kommunikationskanal ab, wozu der Schlüssel in eine fahrzeugseitig vorgesehene, beispielsweise als elektronisches Zündschloß gestaltete Schlüsselaufnahme eingebracht wird. Als weiterer Typ, der gegenwärtig zunehmend Beachtung findet, sind sogenannte "Keyless-Go"-Systeme bekannt, bei denen die Authentikationselemente, wie Chipkarten oder Transponder, nur vom Fahrzeugnutzer mitgeführt werden müssen, ohne einer Handhabung zu bedürfen. Die Authentikationskommunikationen werden bei diesen Systemen benutzerangefordert oder selbsttätig dann ausgelöst, wenn sich ein gültiges Authentikationselement im Wirkbereich des zugehörigen Ansteuerkommunikationskanals befindet, wobei dieser Wirkbereich typischerweise von der Reichweite, d.h. Fangbereich, einer zugehörigen Antennenvorrichtung definiert ist.

Es ist des weiteren bekannt, zusätzlich zu einer Zündschlüssel-Zündschloß-Einheit, über welche die Fahrberechtigung geprüft wird, Mittel zum automatischen oder benutzerangeforderten Abschalten sowie zum benutzerangeforderten Wiederanschalten des Fahrzeugmotors vorzusehen, die hierzu meist ein entsprechendes, an einem Getriebewählhebel angeordnetes Bedienelement beinhalten, siehe die Gebrauchsmusterschriften DE 79 27 688 U1, DE 82 19 522 U1 und DB 87 08 510 U1 sowie die Offenlegungsschrift EP 0 314 611 A1. Diese bekannten Einrichtungen dienen dazu, den Motor kraftstoffverbrauchssparend abzuschalten, wenn das Fahrzeug temporär steht, z.B. an Kreuzungen oder in einem Stau. Dabei bleibt die Zündung während der temporären Motorabschaltung eingeschaltet, d.h. die Fahrberechtigung wird nicht gesperrt. In einer Weiterentwicklung dieses Systemtyps wird in der Zeitschriftenveröffentlichung B. Priemer, Kleines Wunder - Vorstellung Mercedes S-Klasse, auto motor sport, 15/1998, Seite 16 vorgeschlagen, das Fahrzeug nicht mehr per Zündschlüssel zu starten, sondern mittels eines kleinen Knopfs, der sich auf der Schaltkulisse eines Automatgetriebewählhebels befindet.

Der Erfindung liegt als technisches Problem die Bereitstellung einer Wegfahrsperreinrichtung der eingangs genannten Art zugrunde, die sich bei Bedarf als Keyless-Go-System auslegen läßt und bei der authentikationsbehaftete Wegfahrsperren-Ansteuerkommunikationsvorgänge mit hohem Benutzerkomfort auf Benutzeranforderung hin ausgelöst werden können und/oder bei der nach Freigabe eines Motorstarts selbiger vom Fahrzeugführer mit hohem Bedienkomfort aktiviert werden kann.

Die Erfindung löst dieses Problem durch die Bereitstellung einer Wegfahrsperreinrichtung mit den Merkmalen des Anspruchs 1 oder 2.

Bei der Einrichtung nach Anspruch 1 ist speziell vorgesehen, daß die authentikationsbehafteten, d.h. von einer Überprüfung der Nutzerberechtigung begleiteten Wegfahrsperren-Ansteuerkommunikationsvorgänge auf Benutzeranforderung hin erfolgen und hierzu ein entsprechendes Wegfahrsperren-Betätigungselement fahrzeugseitig angeordnet ist, das authentikationselementfrei ,d.h. ohne Verwendung des Authentikationselementes selbst, betätigt werden kann. Diese Einrichtung eignet sich besonders auch zur Auslegung als Keyless-Go-System, wobei dann der Benutzer sein Authentikationselement, z.B. eine Chipkarte, nur bei sich zu tragen braucht. Fahrberechtigungsrelevante Ansteuermaßnahmen kann er dann durch Betätigen des Wegfahrsperren-Betätigungselementes vom Fahrersitz aus anfordern. Der hierdurch ausgelöste Authentikationsvorgang läuft erfolgreich ab, wenn das vom Fahrer mitgeführte, sich im Wirkbereich des Ansteuerkommunikazionskanals befindende Authentikationselement für das betreffende Fahrzeug gültig ist.

Bei der Einrichtung nach Anspruch 2 ist speziell vorgesehen, daß das Wegfahrsperrensteuerteil über eine entsprechende Authentikationskommunikation die Fahrberechtigung, d.h. einen Motorstart, nur dann freigibt und den Motorstart bewirkt, wenn der Benutzer das Bremspedal betätigt, d.h. gedrückt hält. Vorzugsweise ist bei dieser Realisierung vorgesehen, daß das Freigeben des Motorstarts durch einen erfolgreich ablaufenden Authentikationsvorgang auf Anforderung über ein Wegfahrsperren-Betätigungselement erfolgt und das Einschalten der zuvor ausgeschalteten Zündung umfaßt. Auch diese Einrichtung eignet sich gut zur Auslegung als Keyless-Go-System, indem die Motorstartfreigabe dann automatisch oder benutzerangefordert über das vom Benutzer mitgeführte Authentikationselement erfolgt.

Bei einer nach Anspruch 3 weitergebildeten Wegfahrsperreinrichtung ist das Wegfahrsperren-Betätigungselement, mit dem der Benutzer authentikationsbehaftete Wegfahrsperren-Ansteuerkommunikationsvorgänge auslösen kann, von einem am Getriebewählhebel angeordneten Tasterelement gebildet, was eine besonders bequeme Handhabung durch den Fahrer ermöglicht.

Bei einer nach Anspruch 4 weitergebildeten Wegfahrsperreinrichtung ist das Wegfahrsperren-Betätigungselement von einem mehrstufigen Tasterelement gebildet. Mit einer ersten Tasterstufe wird authentikationebehaftet ein Zündungseinschaltvorgang ausgelöst, während mit einer anderen Tasterstufe die Zündung ausgeschaltet werden kann.

Eine nach Anspruch 5 weitergebildete Wegfahrsperreinrichtung beinhaltet ein mehrstufiges Tasterelement als Wegfahrsperren-Betätigungselement, bei welchem eine Tasterstufe zum authentikationsbehafteten Einschalten der Zündung dient, während eine andere Tasterstufe zur Auslösung, d.h. Aktivierung eines Motorstarts vorgesehen ist. Ein solches Tasterelement kann z.B. in Verbindung mit einem Keyless-Go-System vollständig die Funktion herkömmlicher Zündschloßanlagen übernehmen.

Vorteilhafte Ausführungsformen der Erfindung sind in den Zeichnungen dargestellt und werden nachfolgend beschrieben. Hierbei zeigen:
- Fig. 1: eine schematische Teilansicht eines Fahrerplatzbereiches eines Fahrzeugs mit einer Wegfahrsperreinrichtung mit tastenbetätigter Zündung und bremspedalbetätigtem Motorstart und
- Fig. 2: eine schematische Darstellung von Schaltstufen eines mehrstufigen Wegfahrsperren-Tasterelementes für eine gegenüber Fig. 1 modifizierte, gänzlich tastergesteuerte Wegfahrsperreinrichtung.

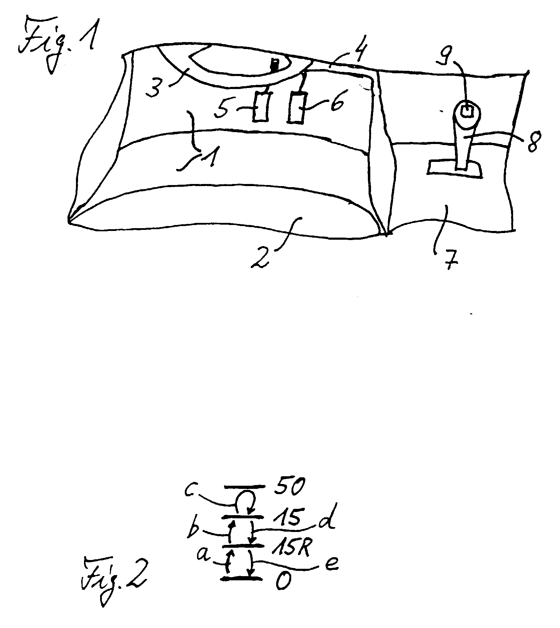

Fig. 1 zeigt schematisch den Blick in den Fahrerplatzbereich eines Personenkraftwagens. Im Fußraumbereich 1 zwischen einem Fahrersitz 2 und einem Lenkrad 3 bzw. Armaturenbrett 4 befindet sich eine übliche Pedalerie mit einem Bremspedal 5 und einem Gaspedal 6. An einem Mitteltunnel 7 befindet sich ein Automatgetriebewählhebel 8, an dessen Oberseite ein als Wegfahreperren-Betätigungselement fungierender Taster 9 angeordnet ist. Als Wegfahrsperre ist eine elektronische Wegfahrsperreinrichtung vom Typ eines Keyless-Go-Systems mit einem entsprechenden, herkömmlichen fahrzeugseitigen Wegfahrsperrensteuerteil und einem drahtlosen Wegfahrsperren-Ansteuerkommunikationskanal für authentikationsbehaftete, d.h. die Fahrberechtigung überprüfende Ansteuerkommunikationsvorgänge zwischen dem Wegfahrsperrensteuerteil und Authentikationselementen vorgesehen, die von den berechtigten Fahrnutzern mitgeführt werden, vorzugsweise in Form von Chipkarten. In dieses Keyless-Go-System sind das Bremspedal 5 und der Taster 9 als vom Benutzer betätigbare, wegfahrsperrenbezogene Bedienelemente wie folgt einbezogen.

Wenn ein berechtigter Fahrzeugnutzer mit seinem gültigen Authentikationselement in das Fahrzeug eingestiegen ist und auf dem Fahrersitz 2 Platz genommen hat, befindet sich das mitgeführte Authentikationselement im Wirkbereich des Wegfahrsperren-Ansteuerkommunikationskanals. Der beispielsweise als Tipptaster ausgeführte Taster 9 dient nun dem Fahrzeugnutzer dazu, einen authentikationsbehafteten Befehl zum Einschalten der Zündung zu geben, d.h. die Betätigung des Tasters 9 löst zunächst einen Authentikationsvorgang zwischen dem Authentikationselement und dem Wegfahrsperrensteuerteil über den zugehörigen Kommunikationskanal aus. Als weitere Bedingung dafür, daß der Authentikations-vorgang tatsächlich durchgeführt wird, ist vorgesehen, daß der Fahrer hierbei das Bremspedal 5 niedergedrückt hält. Wenn dies der Fall ist und der Vorgang erfolgreich abläuft, d.h. ein gültiges Authentikationselement erkannt wird, veranlaßt das Wegfahrsperrensteuerteil einen Motorstart, indem es die Zündung einschaltet und dabei auch die übrige Bordnetzstromversorgung für die peripheren Fahrzeugkomponenten, wie Autoradio und dergleichen, und einen zugehörigen Anlasser aktiviert. Dabei fragt das System vor dem tatsächlichen Starten des Motors ab, ob sich der Automatgetriebewählhebel 8 in Parkstellung P oder Normalstellung N befindet, und wartet ggf. mit dem Starten des Motors, bis der Wählhebel 8 in eine dieser Stellungen verbracht wurde.

Alternativ zu dieser Funktionsweise kann vorgesehen sein, durch das Niederdrücken des Bremspedals 5 einen Authentikationsvorgang auszulösen und bei festgestellter Fahrberechtigung die Zündung einzuschalten. Anschließend kann dann der Motor vom Wegfahrsperrensteuerteil selbsttätig oder auf Anforderung durch den Fahrer über ein weiteres Wegfahrsperren-Betätigungselement gestartet werden, falls der Getriebewählhebel 8 wieder in einer geeigneten Stellung ist.

Zum Abstellen des Motors braucht der Fahrzeugnutzer nur den Taster 9 erneut zu drücken, so daß dieser wieder seinen Zündungaus-Zustand einnimmt. Dabei fragt das System ab, ob das Fahrzeug steht, und schaltet erst dann den Motor tatsächlich ab. Das Stehen des Fahrzeugs kann z.B. über einen Geschwindigkeitssensor oder daran erkannt werden, daß sich der Automatgetriebewählhebel 8 in Parkstellung P oder in Normalstellung N befindet.

Die Wegfahrsperreinrichtung von Fig. 1 hat folglich den Vorteil, daß sie ohne mechanisches oder elektronisches Zündschlüssel/Zündschloß-System auskommt, keinerlei Handhabung des Authentikationselementes erfordert und der Fahrzeugnutzer dennoch durch die nur auf seine Anforderung hin ausgelösten Wegfahrsperren-Ansteuerbefehle jederzeit die Kontrolle über den fahrberechtigungsbezogenen Sicherungszustand des Fahrzeugs behält. Gleichzeitig stellt diese Einrichtung einen hohen Bedienkomfort bei hohem Fremdnutzungsschutz zur Verfügung, indem das Einschalten der Zündung und das Starten des Motors nur durch Benutzer möglich ist, die ein gültiges Authentikationselement bei sich tragen und ein berechtigter Nutzer zum Starten des Fahrzeugs nur den Taster 9 und anschließend das Bremspedal 5 und zum Abstellen des Fahrzeugs nur erneut den Taster 9 zu betätigen braucht.

Alternativ zur Motorstartauslösung über das Bremspedal 5 kann vorgesehen sein, die Motorstartaktivierung über dasselbe Bedienelement vorzunehmen wie das authentikationsbehaftete Einschalten der Zündung. In diesem Fall ist dann ein mehrstufig betätigbares Wegfahrsperren-Betätigungselement vorgesehen, indem beispielsweise der Taster 9 von Fig. 1 als mehrstufiger Taster ausgelegt ist. Ein solches Beispiel ist mit seinen Schaltstellungen in Fig. 2 illustriert.

Im Beispiel von Fig. 2 kann das Tasterelement von einer Nullstellung "0" über eine erste Tasterbeätigung a in eine sogenannte Radiostellung gebracht werden, in welcher die standardisierte Klemme 15R bestromt wird, welche die peripheren Fahrzeugkomponenten, wie Autoradio etc., versorgt. Mit einer zweiten Tasterbetätigung b kann der Taster in einen Zündung-ein-Zustand geschaltet werden, in welcher die standardisierte Klemme 15 bestromt, d.h. die Motorzündung eingeschaltet ist. Gleichzeitig mit der erstgenannten Tasterbetätigung a oder der letztgenannten Tasterbetätigung b wird ein Authentikationskommunikationsvorgang für die elektronische Wegfahrsperreinrichtung ausgelöst, mit dem die Fahrberechtigung geprüft wird. Das tatsächliche Einschalten der Zündung erfolgt dann wiederum nur bei erfolgreichem Ablauf dieses Fahrberechtigungsprüfvorgangs. Anschließend kann dann mit einer dritten Tasterbetätigung c die standardisierte Klemme 50 bestromt, d.h. der Anlasser aktiviert und damit der Motor gestartet werden. Diese Tasterbetätigung c ist zweckmäßigerweise rückkehrend ausgelegt, wie mit dem Umkehrpfeil von Fig. 2 angedeutet, d.h. das Tasterelement kehrt beim Loslassen wieder in die Zündung-ein-Stellung zurück. Zum Abschalten des Motors wird das Tasterelement mit einer erneuten Tasterbetätigung d in seine "Radiostellung" zurückgeschaltet, wodurch die Zündung ausgeschaltet und damit der Motor abgestellt wird, wenn sich der Getriebewählhebel in Park- oder Normalstellung befindet und/oder die Fahrgeschwindigkeit gleich null ist. Über eine weitere rückwärtige Tasterelementbetätigung e können die peripheren Fahrzeugkomponenten stromlos geschaltet werden, und der Taster nimmt wieder seine Nullstellung "0" ein.

Zur Erzielung des in Fig. 2 dargestellten Schaltverhaltens kann das Tasterelement auf verschiedene Weisen ausgelegt sein. So kommt beispielsweise eine Realisierung als Taster nach dem Kugelschreiberprinzip in Betracht, wobei dann die Motorstartaktivierung mittels vollständigem Durchdrücken und Halten des Tasters in dieser Stellung bis zum Anspringen des Motors bewirkt wird. Nach Loslassen kehrt der Kugelschreibertaster in seine Zündung-ein-Stellung zurück. Durch die mit einem solchen Kugelschreibertaster hart, d.h. mechanisch, erfolgende Umschaltung zwischen der Zündung-aus-Stellung und der Zündung-ein-Stellung kann bei Bedarf gleichzeitig eine mechanisch wirkende Lenkungsverriegelung an diesen Taster angekoppelt werden. Alternativ kann das Kugelschreibertasterverhalten elektrisch implementiert sein. Als weitere Alternativen sind zyklisch schaltende Taster, wiederum wahlweise in mechanisch oder elektrisch schaltender Ausführung, verwendbar. In allen diesen Fällen braucht der Fahrzeugnutzer zur Steuerung der Wegfahrsperrfunktionen nur das eine Tasterelement zu betätigen und sein gültiges Authentikationselement mit sich zu führen, ohne selbiges handhaben zu müssen.

Wie aus den oben beschriebenen Beispielen deutlich wird, ermöglicht die erfindungsgemäße Wegfahrsperreinrichtung einen sehr hohen Bedienkomfort beim Schärfen und Entschärfen einer Wegfahrsperre sowie beim An- und Abschalten des Fahrzeugmotors. Dabei ist die Erfindung nicht auf Keyless-Go-Systeme beschränkt, sondern kann nutzbringend auch für andere elektronische und auch für mechanische Wegfahrsperreinrichtungen verwendet werden.

## Patentansprüche

1. Wegfahrsperreinrichtung für ein Kraftfahrzeug, mit
- einem fahrzeugseitigen Wegfahrsperrensteuerteil,
- einem oder mehreren, benutzerseitig mitführbaren Authentikationselementen und
- einem Ansteuerkommunikationskanal für authentikationsbehaftete Wegfahrsperren-Ansteuerkommunikationsvorgänge zwischen dem jeweiligen Authentikationselement und dem Wegfahrsperrensteuerteil, wobei der Wegfahrsperrensteuerteil nur bei positiver Zugangsberechtigungsprüfung den Fahrbetrieb freigibt,
**gekennzeichnet durch**
- ein fahrzeugseitig angeordnetes, authentikationselementfrei betätigbares Wegfahrsperren-Betätigungselement (9) zur benutzerangeforderten Auslösung der authentikationsbehafteten Wegfahrsperren-Ansteuerkommunikationsvorgänge.

2. Wegfahrsperreinrichtung für ein Kraftfahrzeug mit Bremspedal, insbesondere nach Anspruch 1, mit
- einem fahrzeugseitigen Wegfahrsperrensteuerteil,
- einem oder mehreren, benutzerseitig mizführbaren Authentikationselementen und
- einem Ansteuerkommunikationskanal für authentikationsbehaftete Wegfahrsperren-Ansteuerkommunikationsvorgänge zwischen dem jeweiligen Authentikationselement und dem Wegfahrsperrensteuerteil, wobei der Wegfahrsperrensteuerteil nur bei positiver Zugangsberechtigungsprüfung den Fahrbetrieb freigibt,
**dadurch gekennzeichnet**, **daß**
- die Freigabe und Aktivierung eines Motorstarts durch das Wegfahrsperrensteuerteil eine Betätigung des Bremspedals (5) bedingt.

3. Wegfahrsperreinrichtung nach Anspruch 1 oder 2, weiter
**dadurch gekennzeichnet**, **daß**
das Wegfahrsperren-Betätigungselement von einem Tasterelement (9) gebildet ist, das an einem Getriebewählhebel (8) angeordnet ist.

4. Wegfahrsperreinrichtung nach einem der Ansprüche 1 bis 3, weiter
**dadurch gekennzeichnet**, **daß**
das Wegfahrsperren-Betätigungselement von einem mehrstufigen Tasterelement gebildet ist, wobei eine Tasterstufe zur Auslösung eines authentikationsbehafteten Zündungseinschaltvorgangs (a, b) und eine andere Tasterstufe zur Auslösung eines Zündungsausschaltvorgangs (d) dient.

5. Wegfahrsperreinrichtung nach einem der Ansprüche 1, 3 oder 4, weiter
**dadurch gekennzeichnet**, **daß**
das Wegfahrsperren-Betätigungselement von einem mehrstufigen Tasterelement gebildet ist, wobei eine Tasterstufe zur Auslösung eines authentikationsbehafteten Zündungseinschaltvorgangs (a, b) und eine andere Tasterstufe zur Auslösung eines Motorstarts (c) dient.
